# EUROPEAN PATENT APPLICATION

(11) **EP 1 118 793 A2**
(43) Date of publication of application: **25.07.2001**
(21) Application number: 01101094.9
(22) Date of filing: 18.01.2001
(51) Int. Cl.: F16F 9/348

(54) **Hydraulic damping valve**

(30) Priority: 21.01.2000 JP 2000017788
(71) Applicant: YAMAHA HATSUDOKI KABUSHIKI KAISHA, Iwata-shi Shizuoka-ken (JP)
(72) Inventor: Tanaka, Akira, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

A damping valve for a hydraulic damping means, a hydraulic damping cylinder means with a damping valve, a pressure regulator with a damping valve and a suspension device for a four wheeled vehicle with damping valves, wherein such a damping valve comprises a valve seat member provided with at least one communication hole for a working oil flow and at least one sheet valve for opening and closing said communication hole. Said sheet valve has a main valve sheet and at least one sub-valve sheet placed with one over the other with the sub-valve sheet located down-streams with regard to a working oil flow direction, wherein an oil chamber is provided between main valve sheet and a sub-valve sheet. At least one orifice is provided in said main valve sheet connecting the oil chamber with the communication hole.

## Description

This invention relates to a damping valve for a hydraulic damping means, a hydraulic damping cylinder means with a damping valve, a pressure regulator with a damping valve and a suspension device for a four wheeled vehicle with damping valves.

A hydraulic damper is used for example in vehicle suspension devices or systems and is constituted as follows: A piston rod is inserted in a cylinder. A piston serving as a valve seat member is attached to one end of the piston rod. The piston is freely slidably inserted in the cylinder to define oil chambers in the cylinder. The oil chambers are filled with working oil. As working oil flows between the oil chambers when the piston rod and the cylinder move in extending and contracting directions, damping forces are produced, which attenuate aftereffects of shocks from the road surface.

Incidentally, the piston is provided with communication holes and an orifice that interconnect the oil chambers. The communication hole is opened and closed with a ring-shaped sheet valve.

Here, in a low speed range when the speed of the piston in the hydraulic damper constituted as described above is low, the sheet valve remains closed because the pressure of working oil in one oil chamber is low, and the working oil flows through the orifice formed in the piston into the other oil chamber. When the piston speed reaches a medium or high value, the working oil pressure increases and the working oil flows through the communication hole bored in the piston, push-opens the sheet valve, and enters the other oil chamber.

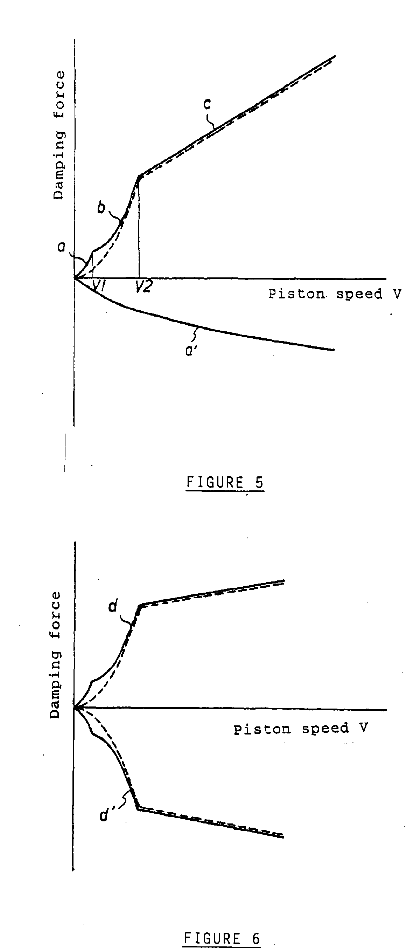

Therefore, the damping force characteristic of such a hydraulic damper as described above becomes as shown with the broken line in FIG. 5 a curve of secondary degree in a low speed range in which the working oil flows only through the orifice, and becomes a straight line in the medium to high speed range in which the sheet valve is push-opened.

However, the hydraulic damper having the above-described damping characteristic for vehicles has a problem that the ride feeling of vehicle is impaired in the low speed range because of the low damping force.

In view of the above, a damping valve structure has been proposed (Japanese laid-open patent application No. Hei-11-153173): As shown in FIG. 7, disks 102 and 103 are respectively placed over and under a piston 101. Sub-valves 104 and 105 are provided to open and close ports 102a and 103a bored through the disks 102 and 103. The sub-valves 104 and 105 are made to deflect more easily by making their deflection rigidity smaller than that of main valves (annular leaf valves) 106 and 107.

This damping valve structure provides a linear damping force characteristic in the low piston speed range as the working oil in one oil chamber SA (SB) flows through the communication hole 101a (101b) and the port 103a (102a) of the piston 101, and as the oil pressure opens the sub-valve 105 (104) and flows into the other oil chamber SB (SA).

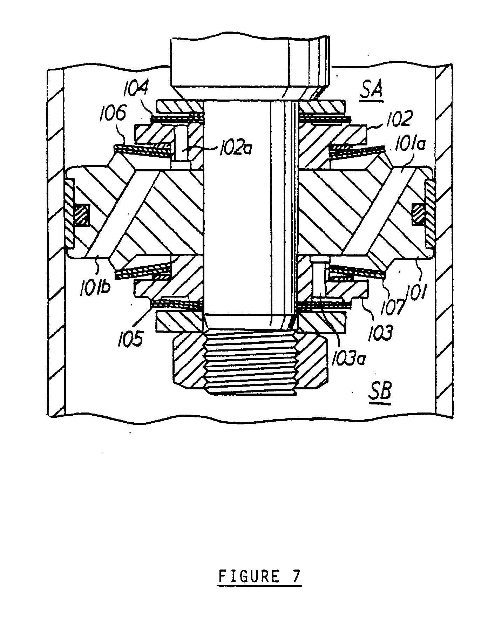

However, when the damping valve structure shown in FIG. 7 is used, the number of components increases because the disks 102 and 103 having ports 102a and 103a are required. Moreover, since these disks 102 and 103 have complicated shapes they are expensive to manufacture. Still another problem is that dimensions around the piston 101 in the sliding direction increase because the disks 102 and 103 are placed over and under the piston 101.

It is an objective of the present invention to provide a damping valve for a hydraulic damping means providing an appropriate damping force and being simple in structure.

According to the present invention said objective is solved by a damping valve for a hydraulic damping means with a valve seat member provided with at least one communication hole for a working oil flow and at least one sheet valve for opening and closing said communication hole, said sheet valve has a main valve sheet and at least one sub-valve sheet placed with one over the other with the sub-valve sheet located down-streams with regard to a working oil flow direction, wherein an oil chamber is provided between main valve sheet and a sub-valve sheet, and wherein at least one orifice is provided in said main valve sheet connecting the oil chamber with the communication hole.

Such a damping valve is capable of providing appropriate damping force characteristics in a low piston speed range with a simple structure without inviting increase in the number of components and cost.

Preferred embodiments of the present invention are laid down in the dependent claims.

Furthermore, it is also an objective of the present invention to provide a hydraulic damping cylinder means with a damping valve, a pressure regulator with a damping valve and a suspension device for a four wheeled vehicle with damping valves providing an appropriate damping force and being simple in structure.

According to one further aspect of the present invention said objective is solved by a hydraulic damping cylinder means comprising a piston inserted freely slidably in a cylinder, said piston divides said cylinder into an upper oil chamber and a lower oil chamber, wherein said piston is a valve seat member and is provided with at least one damping valve according to at least one of the claims 1 to 8, and said communication hole is provided for working oil flow from one of the upper and lower oil chamber to the other thereof.

According to one further aspect of the present invention said objective is solved by a pressure regulator comprising a piston inserted freely slidably in a cylinder, said piston divides said cylinder into an upper oil chamber and a lower oil chamber each connected with a hydraulic damping cylinder means, respectively, wherein said piston is a valve seat member and is provided with at least two damping valves according to at least one of the claims 1 to 8, and a communication hole of a first damping valve is provided for working oil flow from the lower oil chamber to the upper oil chamber and a communication hole of a second damping valve is provided for working oil flow from the upper oil chamber to the lower oil chamber.

According to one further aspect of the present invention said objective is solved by a Suspension device for a four wheeled vehicle with at least two hydraulic damping cylinder means comprising a piston inserted freely slidably in a cylinder, said piston divides said cylinder into an upper oil chamber and a lower oil chamber, and with a pressure regulator comprising a piston inserted freely slidably in a cylinder, said piston divides said cylinder into an upper oil chamber and a lower oil chamber each connected with one of the upper and lower oil chamber of the hydraulic damping cylinder means, respectively, wherein said piston of the hydraulic damping cylinder means is a valve seat member and is provided with at least one damping valve according to at least one of the claims 1 to 8, and said communication hole is provided for working oil flow from one of the upper and lower oil chamber to the other thereof, and/or wherein said piston of the pressure regulator is a valve seat member and is provided with at least two damping valves according to at least one of the claims 1 to 8, and a communication hole of a first damping valve is provided for working oil flow from the lower oil chamber to the upper oil chamber and a communication hole of a second damping valve is provided for working oil flow from the upper oil chamber to the lower oil chamber.

In the following, the present invention is explained in greater detail with respect to several embodiments thereof in conjunction with the accompanying drawings, wherein:
FIG, 1 shows an overall constitution in cross section of a vehicle suspension device comprising hydraulic dampers or damping valves;
FIG. 2 is a partial, enlarged, detailed view of a piston portion of one hydraulic cylinder of the same suspension system comprising hydraulic dampers or damping valves;
FIG. 3 is an enlarged, detailed view of the portion A in FIG. 2;
FIG. 4 is an enlarged, detailed view of the piston portion of a pressure regulator of the vehicle suspension device comprising hydraulic dampers or damping valves;
FIG. 5 shows a damping force characteristic of a hydraulic cylinder of the vehicle suspension device;
FIG. 6 shows a damping force characteristic of a pressure regulator of the vehicle suspension device; and
FIG. 7 shows a damping valve structure in cross section of a conventional hydraulic damper.

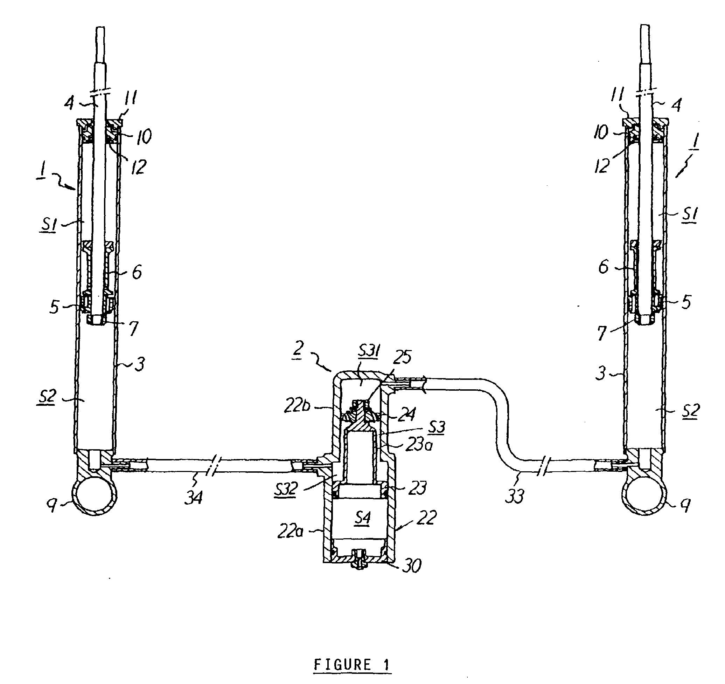

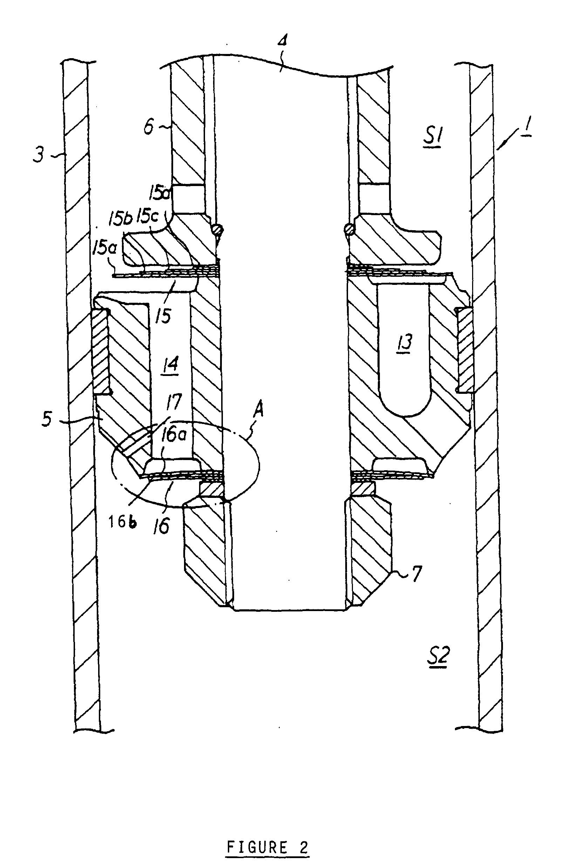

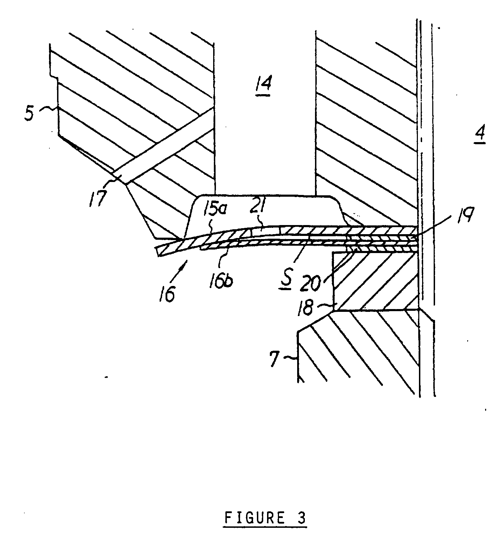

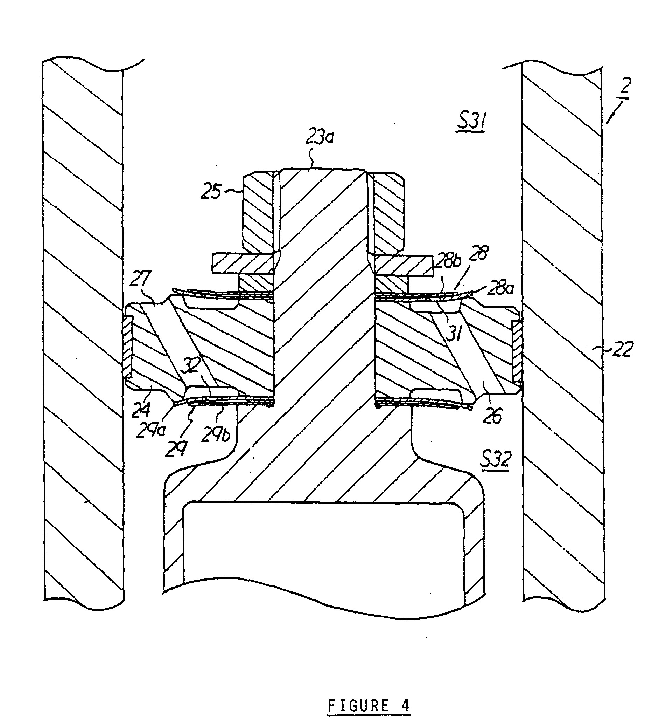

FIG. 1 shows an overall constitution in cross section of a vehicle suspension device or system comprising hydraulic dampers or damping valves. FIG. 2 is a partial, enlarged, detailed view of a piston portion of one hydraulic cylinder of the same suspension system. FIG. 3 is an enlarged, detailed view of the portion A of FIG. 2. FIG. 4 is an enlarged, detailed view of the piston portion of the same suspension system.

The vehicle suspension device or system of this embodiment is for suspending for example right and left front wheels of a four-wheeled vehicle such as an automobile, and comprises as shown in FIG. 1 a pair of right and left hydraulic cylinders 1 (hydraulic damping cylinder means), and a pressure regulator 2 connected to those hydraulic cylinders 1. The hydraulic cylinders 1 and the pressure regulator 2 constitute a hydraulic damper means comprising damping valves.

Here, the detailed constitution of the hydraulic cylinder 1 will be described in reference to FIGs. 1 to 3.

Each hydraulic cylinder 1 is constituted as follows: A piston rod 4 is inserted from above into a cylinder 3. A piston 5 is secured to the lower end portion of the piston rod 4 through a sleeve 6 by means of a nut 7 and inserted freely slidably into the cylinder 3. A connection member 9 is fitted into the lower end of the cylinder 3. A guide member 10 and a cap 11 are fitted to the upper end of the inside circumference of the cylinder 3. Oil-tight sealing between the cylinder 3 and the piston rod 4 is effected as an oil seal 12 held to the inside circumference of the guide member 10 comes in sliding contact with the outside circumference of the piston rod 4.

The interior of the cylinder 3 is divided into an upper oil chamber S1 and a lower oil chamber S2, both filled with working oil. As shown in FIG. 2 in detail, a plural number of communication holes 13 and 14 for interconnecting the oil chambers S1 and S2 are alternately bored at positions along a single circle in the piston 5. Ring-shaped sheet valves 15 and 16 for opening and closing the communication holes 13 and 14 are placed respectively over and under the piston 5. As shown in FIGs. 2 and 3, a small diameter orifice 17 for constantly interconnecting the communication holes 14 and the lower oil chamber S2 is formed in the upper part of the piston 5. Said piston 5 of the hydraulic damping cylinder means 1 serves as a valve seat member of an embodiment of a damping valve as described in detail below. Said embodiment of a damping valve with a piston 5 as a valve seat member comprises the sheet valve 15 being one type of valve and the sheet valve 16 being a further type of valve.

Said one sheet valve 15 is built up by laminating four valves (valve sheets) 15a, 15b, 15c, and 15d of different diameters. The inside circumferential portions of the valves 15a, 15b, 15c, and 15d are sandwiched and secured between the piston 5 and the sleeve 6, with their outer circumferential portions are deflectable, and with the outer circumference of the largest diameter valve 15a is made to tightly contact the top surface of the piston 5 as shown.

The other sheet valve 16 is constituted with a main valve (sheet) 16a and a sub-valve (sheet) 16b of different diameters, with their inner circumferential portions fixed and with the outer circumferential portions deflectable. That is to say, as shown in detail in FIG. 3, it is constituted by laminating both valves 16a and 16b, with the sub-valve 16b on the outer side (on the underside of the main valve 16a in the example of FIG. 3), with the inner circumferential portions of both valves 16a and 16b sandwiched among a washer 18, shims 19, 20, and the piston 5 and tightened with a nut 7. The outer circumferential portions of both valves 16a and 16b are deflectable, with the outer circumferential portion of the main valve 16a is in tight contact with the underside of the piston 5. Here, the rigidity of the sub-valve 16b is set lower than that of the main valve 16a so that the former deflects more easily than the latter.

The outside circumferential portion of the main valve 16a is provided with an initial deflection. Therefore, that portion is concave as seen from under and in contact with the underside of the piston 5. Since a shim 19 is interposed between the inside circumferential portions of the valves 16a and 16b, an oil chamber S is formed with the concave surface (underside) of the main valve 16a and the top surface of the sub-valve 16b, with the oil chamber S constantly in fluid communication with the communication holes 14 through the orifice 21 formed in the main valve 16a.

Regarding the above hydraulic damping cylinder means, the damping valve with the sheet valve 16 has been described as an embodiment wherein the valve seat member is identical with or at least part of the piston 5 which is movable within the cylinder 3. Said piston 5 has one sheet valve 16 having a specific damping characteristic (which will be described later) with regard to one flow direction of the working oil. Regarding the opposite flow direction, a valve sheet 15 of a different type is provided. Thus, the damping characteristic will be different for the different flow directions. However, said piston 5 can be also provided with two sheet valves of the type of the sheet valve 16 described above, each for one of the flow directions. In this case, the damping characteristic can be adapted to be the same for both flow directions of the working oil. Moreover, with two sheet valves of the type of the sheet valve 16 described above a desired damping characteristic can be individually adapted for each flow direction.

Furthermore, the damping characteristic of the damping valve having a valve sheet of the type of the sheet valve 16 can be adjusted by changing the diameter of the orifice 21, the thickness of the shim 19 and the rigidity of the main valve sheet 16a and the sub-valve sheet 16b.

Regarding the above described hydraulic damping cylinder means 1 the damping valve is shown in combination with the piston 5 as a valve seat member. However, such a damping valve can be also provided within a hydraulic tube or the like with a fixed valve seat member in order to provide a specific damping characteristic of a working oil flowing to said tube or the like.

Within the above embodiments, the damping valve is shown with one sheet valve 16 associated to one communication hole 14. However, such a damping valve can also be provided with a plurality of communication holes associated to one sheet valve as well as a plurality of such sheet valves respectively associated to communication holes provided within a single valve seat member.

Furthermore, the damping valve described above teaches a sheet valve with one main valve sheet and one sub-valve sheet. However, such a damping valve can also be provided with one main valve sheet in combination with one or more sub-valve sheets placed one over the other so that the sub-valve sheet is constituted by a plurality of valve sheet members without any space between said sheet members.

Moreover, the damping valve as mentioned above can be provided with a plurality of valve sheets placed one over the other wherein an oil chamber is provided between each of said valve sheets. Thus, each valve sheet being upstream serves as a main valve sheet with regard to the respective downstream valve sheet. With regard thereto, at least one orifice is provided in said valve sheet which should be considered as a main valve sheet.

Moreover, the above-mentioned embodiment teaches a damping valve with one orifice provided in the main valve sheet. Such a damping valve can be also provided with a plurality of orifices or openings in the main valve sheet.

Moreover, the sub-valve sheet according to the embodiment mentioned above is not provided with an orifice. Also, such a sub-valve sheet without an orifice constitutes a preferred embodiment and a further orifice can also be provided within said sub-valve sheet. Such a further orifice can be used instead of the orifice 17 as mentioned above or in addition thereto.

Next, details of the constitution of the pressure regulator 2 will be described in reference to FIGs. 1 and 4.

As shown in FIG. 1, the pressure regulator 2 comprises a cylinder 22 having a greater diameter portion 22a and a smaller diameter portion 22b, with a free piston 23 inserted freely slidably in the greater diameter portion 22a. The free piston 23 has an upward extending piston rod portion 23a with its top end provided with a piston 24 secured with a nut 25 and inserted freely slidably in the smaller diameter portion 22b. As shown in FIG. 4 in detail, a plural number of communication holes 26 and 27 are bored alternately in positions approximately along a single circle in the piston 25. Ring-shaped sheet valves 28 and 29 for opening and closing the communication holes 26 and 27 are respectively placed over and under the piston 24. A cap 30 is fitted to the bottom end of the cylinder 22.

The sheet valves 28 and 29 are constituted similarly to the sheet valve 16 provided at the piston 5 in the hydraulic cylinder 1. That is to say, one sheet valve 28 is constituted with a sub-valve (sheet) 28b placed over a main valve (sheet) 28a. The other sheet valve 29 is constituted with a main valve (sheet) 29a placed over a sub-valve (sheet) 29b. Oil chambers (not provided with symbols) formed in the respective sheet valves 28 and 29 are made to be always in fluid communication with the communication holes 26 and 27 through orifices 31 and 32 formed in the respective main valves 28a and 29a.

The interior of the cylinder 22 is divided with the free piston 23 into an oil chamber S3 and a gas chamber S4, with the oil chamber S3 further divided into an upper oil chamber S31 and a lower oil chamber S32. The oil chambers S31 and S32 are filled with working oil, and the gas chamber S4 is filled with an inert gas. As shown in FIG. 1, the upper oil chamber S31 is connected through a hydraulic hose 33 to the lower oil chamber S2 of the right hand side hydraulic cylinder 1, while the lower oil chamber S32 is connected through a hydraulic hose 34 to the lower oil chamber S2 of the left hand side hydraulic cylinder 1.

When the vehicle suspension system constituted as described above is employed, the pressure regulator 2 is mounted on the vehicle body side, the cylinders 3 of the hydraulic dampers 1 are mounted on the wheel side through the connecting members 9, and the piston rods 4 are connected to the vehicle body side. Therefore, a pair of right and left front wheels of a four-wheeled vehicle are suspended from the vehicle body side by means of this suspension system.

Regarding the above pressure regulator, the damping valve with the sheet valves 28 and 29 has been described as an embodiment wherein the valve seat member is identical with or at least part of the piston 24 which is movable within the cylinder 22. Said piston 22 is provided with two sheet valves 28, 29 which are of the same type of the sheet valve 16 described above, each for one of the flow directions. In this case, the damping characteristic can be adapted to be the same for both flow directions of the working oil.

As already explained, the damping characteristic of the damping valve having valve sheet 28, 29 of the type of the sheet valve 16 can be adjusted by changing the diameter of the orifices 31, 32, the thickness of the shim and the rigidity of the respective main valve sheet 28a, 29a and the respective sub-valve sheet 28b, 29b.

Regarding the above described pressure regulator 2, the damping valve is shown in combination with the piston 24 as a valve seat member. However, such a damping valve can be also provided within a hydraulic tube or the like with a fixed valve seat member in order to provide a specific damping characteristic of a working oil flowing to said tube or the like.

Within the above embodiments, the damping valve is shown with one sheet valve 28 or 29 associated to one communication hole 26 or 27, respectively. However, such a damping valve can also be provided with a plurality of communication holes associated to one sheet valve as well as a plurality of such sheet valves respectively associated to communication holes provided within a single valve seat member.

Furthermore, the damping valve described above teaches a sheet valve with one main valve sheet and one sub-valve sheet. However, such a damping valve can also be provided with one main valve sheet in combination with one or more sub-valve sheets placed one over the other so that the sub-valve sheet is constituted by a plurality of valve sheet members without any space between said sheet members.

Moreover, the damping valve as mentioned above can be provided with a plurality of valve sheets placed one over the other wherein an oil chamber is provided between each of said valve sheets. Thus, each valve sheet being upstream serves as a main valve sheet with regard to the respective downstream valve sheet. With regard thereto, at least one orifice is provided in said valve sheet which should be considered as a main valve sheet.

Moreover, the above-mentioned embodiment teaches a damping valve with one orifice provided in the main valve sheet. Such a damping valve can be also provided with a plurality of orifices or openings in the main valve sheet.

Moreover, the sub-valve sheet according to the embodiment mentioned above is not provided with an orifice. Also, such a sub-valve sheet without an orifice constitutes a preferred embodiment and a further orifice can also be provided within said sub-valve sheet.

Next, the function of the vehicle suspension of this embodiment will be described.

When a four-wheeled vehicle runs on a road and its right and left front wheels move up and down to follow road surface irregularities, the cylinder 3 and the piston rod 4 of each hydraulic damper 1 move to extend or contract. For example, when the right and left front wheels run over a bump on a road surface and the piston rods 4 move down by the same travel relative to the cylinders 3 of the right and left hydraulic dampers 1, the pistons 5 connected to the piston rods 4 move down in the cylinder 3.

When the piston 5 moves up and down in the cylinder 3, working oil in the lower oil chamber S2 flows through the communication hole 13 formed in the piston 5 to push-open the sheet valve 15, and into the upper oil chamber S1. At this time, flow resistance of working oil produces a damping force. The damping force (on the compression side) produced at this time is indicated with a solid line (a') relative to the piston speed (V) in FIG. 5.

At the same time, in the respective cylinders 1, working oil by the volume corresponding to part of the piston rods 4 that enters the cylinders 3 flows from the lower chambers S2 through the hydraulic hoses 33 and 34 into the upper and lower oil chambers S31 and S32. The free piston 23 and the piston 24 move down as a single body in the cylinder 22 to compress the gas in the gas chamber S4. Since the cross-sectional areas of the greater diameter portion 22a and the smaller diameter portion 22b of the cylinder 22 of the pressure regulator 2 are set so that the volumes of the upper oil chamber S31 and the lower oil chamber S32 increase or decrease by the same amount, little working oil flows through the piston 24 between the oil chambers S31 and S32. As a result, little damping force is produced with the pressure regulator 2.

Therefore, when the right and left front wheels move up to compress the right and left hydraulic cylinders 1 by the same amount, bouncing of the vehicle body after the wheel runs over an irregular road surface is attenuated with the damping force (Refer to the solid line a' in FIG. 5) produced as the working oil in each hydraulic cylinder 1 flows to push-open the sheet valve 15. In this way, the ride feeling on the vehicle is improved.

In contrast to the above, when the right and left front wheels run over a recess on the road surface and the piston rods 4 move up by the same travel relative to the cylinders 3, the pistons 5 connected to the piston rods 4 move up in the cylinder 3.

When the pistons 5 move up in the cylinders 3 as described above, pressure of the working oil in the upper oil chambers S1 increases. However, since the oil chamber S formed between the main valve 16a and the sub-valve 16b of the sheet valve 16 is connected to the upper oil chamber S1 through the orifice 21 formed in the main valve 16a and the communication holes 14 formed in the piston 5, the pressure in the oil chamber S is the same as that in the upper oil chamber S1, and the pressure in the upper oil chamber S1 works on the top surfaces of the main valve 16a and the sub-valve 16b.

In a low speed range where the piston speed V is very small, or below V1 in FIG. 5, since the pressure in the upper oil chamber S1 is small, the communication hole 14 remains closed with the main valve 16a and the sub-valve 16b of the sheet valve 16, the working oil in the upper oil chamber S1 flows through the orifice 17 bored through the piston 5, and a damping force (on the extending side) is produced as shown with a solid line (a) in FIG. 5 with the hydraulic cylinder 1 by the flow resistance of the working oil.

After that, when the piston speed V increases and reaches V1, only the sub-valve 16b is push-opened with the pressure in the upper oil chamber S1, and the working oil in the upper oil chamber S1 flows through the communication hole 14 and the orifice 17 in the piston 5 and also through the orifice 21 of the main valve 16a, the oil chamber S, and the sub-valve 16b into the lower oil chamber S2 to produce a damping force with the flow resistance of the working oil as shown with a solid line (b) in FIG. 5.

When the piston speed V further increases to reach V2 in FIG. 5, both of the main valve 16a and the sub-valve 16b of the sheet valve 16 are push-opened with the pressure in the upper oil chamber S1 and most of the working oil in the upper oil chamber S1 flows from the communication hole 14 in the piston 5 through the sheet valve 16 into the lower oil chamber S2. At this time, a damping force as indicated with the solid line (c) in FIG. 5 is produced with the flow resistance in the cylinder 1.

As described above, when the piston speed V is in the very low range of V1 ≤ V ∠ V2, working oil exerts pressure from the orifice 21 formed in the main valve 16a to the oil chamber S formed between the valves 16a and 16b, and flows as it push-opens only the sub-valve 16b. As a result, a damping force as shown with a solid line (c) in FIG. 5, that is appropriately higher than that produced with a conventional arrangement as shown with a broken line, is produced in the low speed range. In this case, since the oil chamber S is formed by laminating the main valve 16a and the sub-valve 16b, and the oil chamber S is connected through the orifice 21 formed in the main valve 16a to the communication hole 14 of the piston 5, it is possible to constitute the sheet valve 16 with a minimum number of components, to simplify the constitution around the piston 5, and to reduce dimensions in the sliding direction.

Another advantage of this embodiment is that the oil chamber S can be constituted simply without increasing the number of components because the initial deflection given to the main valve 16a is set so that the valve 16a does not to open unless the working oil pressure exceeds a certain value, and the convex surface of the main valve 16a set in this way is effectively used for defining the oil chamber S.

Still another advantage is that, since the shim 19 is interposed between the main valve 16a and the sub-valve 16b of the sheet valve 16, the amount of the initial deflection given to the sub-valve 16b may be changed to any amount by adjusting the thickness of the shim 19. As a result, the damping force characteristic in the low speed range may be adjusted in a simple manner.

Furthermore, this embodiment makes it possible to make the diameters of the main valve 16a and the sub-valve 16b of the sheet valve 16 as great as possible because the plural number of communication holes 13 and 14 are formed in positions approximately along a single circle in the piston 5, which in turn makes it possible to facilitate the adjustment of the damping force characteristics.

Incidentally, when the hydraulic cylinders 1 extend, an amount of working oil corresponding to part of the piston rods 4 that come out of the cylinders 3 is supplied from the upper and lower oil chambers S31 and S32 of the pressure regulator 2 through the hydraulic hoses 33 and 34 to the respective lower oil chambers S2. As a result, the free piston 23 and the piston 24 of the pressure regulator 2 as a single body move up in the cylinder 22, and the gas in the gas chamber S4 expands. However, since the cross-sectional areas of the greater diameter portion 22a and the smaller diameter portion 22b of the cylinder 22 of the pressure regulator 2 are set so that the volumes of the upper and lower oil chambers S31 and S32 change by the same amount, little working oil flows between the oil chambers S31 and S32 through the piston 24, and therefore little damping force is produced with the pressure regulator 2.

Therefore, when the right and left hydraulic cylinders 1 extend by the same travel as the right and left front wheels move down by the same travel, the bouncing of the vehicle body after it has negotiated a road surface irregularity is attenuated with the damping forces (indicated with solid lines a, b, and c in FIG. 5) produced in respective hydraulic cylinders 1, and ride feeling is improved.

On the other hand, in the case the hydraulic cylinder 1 on the right hand side contracts and the hydraulic cylinder 1 on the left hand side extends as the vehicle body makes a right turn for example, in a similar manner to that described above, a damping force indicated with a solid line (a') in FIG. 5 is produced with the left hand side hydraulic cylinder 1, and damping forces indicated with solid lines (a, b, and c) in FIG. 5 are produced with the right hand side hydraulic cylinder 1.

When the right turn is made as described above, an amount of working oil corresponding to part of the piston rod 4 entering the cylinder 3 of the left hand side hydraulic cylinder 1 flows from the lower oil chamber S2 through the hydraulic hose 34 into the lower oil chamber S32 of the pressure regulator 2. Also an amount of working oil corresponding to part of the piston rod 4 coming out of the cylinder 3 of the right hand side hydraulic cylinder 1 flows from the upper oil chamber S31 of the pressure regulator 2 through the hydraulic hose 33 into the lower oil chamber S2 of the hydraulic cylinder 1. As a result, a working oil flow is produced in the pressure regulator 2 running from the lower oil chamber S32 to the upper oil chamber S31. That is, the working oil flows from the lower oil chamber S32 to the upper oil chamber S31 through the sheet valve 28 and the communication hole 26 of the piston 24. Since the sheet valve 28 as describe above is similarly constituted to the sheet valve 16 in the hydraulic cylinder 1, a damping force indicated with a solid line (d) relative to the piston speed V in FIG. 6 is produced with the pressure regulator 2 as the working oil flows from the lower oil chamber S32 to the upper oil chamber to S31. Therefore, rolling of the vehicle body is restricted as extension and contraction of the right and left hydraulic cylinders 1 are restricted with the damping force produced with the pressure regulator 2.

When the vehicle makes an opposite, left turn in contrast to the above, and the left hand side hydraulic cylinder 1 extends and the right hand side hydraulic cylinder 1 contracts, damping forces indicated with solid lines (a, b, and c) in FIG. 5 are produced with the left hand side hydraulic cylinder 1 and a damping force shown with the solid line (a') is produced with the right hand side hydraulic cylinder 1.

When the left turn is made as described above, an amount of working oil corresponding to part of the piston rod 4 coming out of the cylinder 3 of the left hand side hydraulic cylinder 1 flows from the lower oil chamber S32 of the pressure regulator 2 through the hydraulic hose 34 into the lower oil chamber S2 of the left hand side hydraulic cylinder 1. Also an amount of working oil corresponding to part of the piston rod 4 entering the cylinder 3 of the right hand side hydraulic cylinder 1 flows from the lower oil chamber S2 of the hydraulic cylinder 1 through the hydraulic hose 33 into the upper oil chamber S31 of the pressure regulator 2. As a result, a working oil flow is produced in the pressure regulator 2 running from the upper oil chamber S31 to the lower oil chamber S32. That is, the working oil flows from the upper oil chamber S31 to the lower oil chamber S32 through the sheet valve 29 and the communication hole 27 of the piston 24. Since the sheet valve 29 as describe above is similarly constituted to the sheet valve 16 in the hydraulic cylinder 1, a damping force indicated with a solid line (d') relative to the piston speed V in FIG. 6 is produced with the pressure regulator 2 as the working oil flows from the upper oil chamber to S31 to the lower oil chamber S32. Therefore, rolling of the vehicle body is restricted as extension and contraction of the right and left hydraulic cylinders 1 are restricted with the damping force produced with the pressure regulator 2.

With the vehicle suspension system of this embodiment, in the case the right and left hydraulic cylinders 1 extend or contract in the same direction, shocks are absorbed and attenuated with the damping forces produced with the respective hydraulic cylinders 1.
In the case one of the right and left hydraulic cylinders 1 extends while the other contracts, rolling of the vehicle body is restricted as the extension and contraction of the hydraulic cylinders 1 are restricted with the damping force produced with the pressure regulator 2 in addition to the damping forces produced with the respective hydraulic cylinders 1.

Since the pressure regulator 2 is also provided with the sheet valves 28 and 29 that are similar to the sheet valve 16 provided in each hydraulic cylinder 1, the same effect as obtained with each hydraulic cylinder 1 is also obtained with the pressure regulator 2.

As is clear from the above explanation, a vehicle suspension device or system in which a damping force is produced as working oil flows to push-open a ring-shaped sheet valve for opening and closing a communication hole formed through a valve seat member, with the sheet valve constituted with a main valve and a sub-valve, with their inside circumferential portions fixed and with their outside circumferential portions deflectable, with both of the valves placed one over the other with the sub-valve located on the outer side and with an oil chamber defined between both of them, and with the oil chamber connected to the communication hole in the valve seat member. As a result, appropriate damping force characteristics are provided with a simple constitution without increasing the number of components and cost.

A hydraulic damper or damping valve according to the above embodiments produces a damping force as working oil push-opens a ring-shaped sheet valve for opening and closing communication holes bored in a valve seat member, wherein the sheet valve is constituted with a main valve sheet and a sub-valve sheet, with their inside circumferential portions fixed and with their outside circumferential portions deflectable, the valve sheets are placed with one over the other with the sub-valve sheet located on the outer side and with an oil chamber formed between them, and with the oil chamber connected to the communication holes in the valve seat member.

Therefore, in the low speed range, the working oil flows through the orifice formed in the main valve sheet, exerts pressure in the oil chamber formed between both valve sheets, and push-opens the sub-valve sheet only, to provide a damping force characteristic appropriate in the low speed range. In this case, since it is constituted that the main valve sheet is placed over the sub-valve sheet to form an oil chamber between them, and the oil chamber is connected through the orifice formed in the main valve sheet to the communication holes of the valve seat member, the damping valve portion may be constituted with a minimum number of components, with a simplified structure around the piston, and with a reduced dimensions in the sliding direction.

The hydraulic damper according to the above embodiments is provided with an initial deflection given to the outside circumferential portion of the main valve sheet, the main valve sheet in the state of being bent back is secured to the valve seat member, and the oil chamber is formed with the concave surface of the main valve and the sub-valve.

Since an initial deflection given to the main valve sheet is set so that the main valve does not open unless the working oil pressure exceeds a certain value and since the concave surface of the main valve sheet formed by the setting is utilized to form the oil chamber, the oil chamber is formed in a simple manner without increasing the number of components.

Regarding the embodiments a shim is interposed between the main valve sheet and the sub-valve sheet, and the valves are secured to the valve seat member.

Since it is possible to optionally change the amount of initial deflection given to the sub-valve sheet by adjusting the thickness of the shim, the damping force characteristic in the low speed range may be easily adjusted.

As can be taken from the embodiments a plural number of communication holes are bored in positions approximately on a single circle in the valve seat member.

Since the plural number of communication holes are bored in positions approximately on the same circle in the valve seat member, the diameters of the main valve sheet and sub-valve sheet may be made as large as possible. This facilitates the adjustment of the damping force characteristics.

The above mentioned embodiments are teaching a damping valve for a hydraulic damping means with a valve seat member 5,24 provided with at least one communication hole 14,26,27 for a working oil flow and at least one sheet valve 16,28,29 for opening and closing said communication hole 14,26,27. Said sheet valve 16,28,29 has a main valve sheet 16a,28a,29a and at least one sub-valve sheet 16b,28b,29b placed with one over the other with the sub-valve sheet 16b,28b,29b located down-streams with regard to a working oil flow direction. An oil chamber S is provided between main valve sheet 16a,28a,29a and a sub-valve sheet 16b,28b,29b, and at least one orifice 21,26,27 is provided in said main valve sheet 16a,28a,29a connecting the oil chamber S with the communication hole 14,26,27.

The main valve sheet 16a,28a,29a and the sub-valve sheet 16b,28b,29b are ring-shaped, with their inside circumferential portions fixed to the valve seat member 5,24 and with their outside circumferential portions deflectable. The main valve sheet 16a,28a,29a and the sub-valve sheet 16b,28b,29b having different diameters.

The outside circumferential portion the main valve sheet 16a,28a,29a is in tightened contact with the valve seat member 5,24 and the outside circumferential portion of the sub-valve sheet 16b,28b,29b is in tightened contact with the main valve sheet 16a,28a,29a.

An initial deflection is given to the outside circumferential portion of the main valve sheet 16a,28a,29a, said main valve sheet 16a,28a,29a with the initial deflection is bent back in the working oil flow direction, and the oil chamber S is formed with a concave surface of the main valve sheet 16a,28a,29a and a facing surface of the sub-valve 16b,28b,29b. A rigidity of the sub-valve sheet 16b is set lower than that of the main valve sheet 16a. A shim 19 is interposed between the inside circumferential portions of the main valve sheet 16a,28a,29a and the sub-valve sheet 16b,28b,29b, and both of the valve sheets are secured to the valve seat member 5,24.

A plurality of the communication holes 14,26,27 are bored in positions approximately on a single circle in the valve seat member 5,24.

According to a embodiment, the hydraulic damping cylinder means comprises a piston 5 inserted freely slidably in a cylinder 3, said piston 5 divides said cylinder 3 into an upper oil chamber S1 and a lower oil chamber S2. Said piston 5 is a valve seat member and is provided with at least one damping valve as mentioned above, and the communication hole 14 of said damping valve is provided for working oil flow from one of the upper and lower oil chamber to the other thereof.

According to a embodiment, the pressure regulator comprises a piston 24 inserted freely slidably in a cylinder 22. Said piston 24 divides said cylinder 22 into an upper oil chamber S31 and a lower oil chamber S32 each connected with a hydraulic damping cylinder means, respectively. Said piston 24 is a valve seat member and is provided with at least two damping valves as mentioned, and a communication hole 26 of a first damping valve is provided for working oil flow from the lower oil chamber S32 to the upper oil chamber S31 and a communication hole 27 of a second damping valve is provided for working oil flow from the upper oil chamber S31 to the lower oil chamber S32. Said piston 24 of the pressure regulator 2 serves as a valve seat member which is common for both damping valves so that the mentioned first and second damping valve with the common valve seat member (piston 24) constitute a single bi-directional damping valve.

According to the embodiment, the suspension device for a four wheeled vehicle is provided with at least two hydraulic damping cylinder means 1 (as mentioned above) comprising a piston 5 inserted freely slidably in a cylinder 3. Said piston 5 divides said cylinder 3 into an upper oil chamber S1 and a lower oil chamber S2. Said suspension device is further provided with a pressure regulator 2 (as mentioned above) comprising a piston 24 inserted freely slidably in a cylinder 22. Said piston 24 divides said cylinder 22 into an upper oil chamber S31 and a lower oil chamber S32 each connected with one of the upper and lower oil chamber S1,S2 of the hydraulic damping cylinder means 1, respectively. Said piston 5 of the hydraulic damping cylinder means 1 is a valve seat member and is provided with at least one damping valve as mentioned above, and said communication hole 14 is provided for working oil flow from one of the upper and lower oil chamber to the other thereof, and/or said piston 24 of pressure regulator 2 is a valve seat member and is provided with at least two damping valves as mentioned above, and a communication hole 26 of a first damping valve is provided for working oil flow from the lower oil chamber S32 to the upper oil chamber S31 and a communication hole 27 of a second damping valve is provided for working oil flow from the upper oil chamber S31 to the lower oil chamber S32. Said piston 24 of the pressure regulator 2 within the vehicle suspension device serves as a valve seat member which is common for both damping valves so that the mentioned first and second damping valve with the common valve seat member (piston 24) constitute a single bi-directional damping valve.

## Claims

1. Damping valve for a hydraulic damping means with a valve seat member (5,24) provided with at least one communication hole (14,26,27) for a working oil flow and at least one sheet valve (16,28,29) for opening and closing said communication hole (14,26,27), said sheet valve (16,28,29) has a main valve sheet (16a,28a,29a) and at least one sub-valve sheet (16b,28b,29b) placed with one over the other with the sub-valve sheet (16b,28b,29b) located down-streams with regard to a working oil flow direction, wherein an oil chamber (S) is provided between main valve sheet (16a,28a,29a) and a sub-valve sheet (16b,28b,29b), and wherein at least one orifice (21,26,27) is provided in said main valve sheet (16a,28a,29a) connecting the oil chamber (S) with the communication hole (14,26,27).

2. Damping valve according to claim 1, wherein the main valve sheet (16a,28a,29a) and the sub-valve sheet (16b,28b,29b) are ring-shaped, with their inside circumferential portions fixed to the valve seat member (5,24) and with their outside circumferential portions deflectable.

3. Damping valve according to claim 2, wherein the main valve sheet (16a,28a,29a) and the sub-valve sheet (16b,28b,29b) having different diameters.

4. Damping valve according to claim 2 or 3, wherein the outside circumferential portion the main valve sheet (16a,28a,29a) is in tightened contact with the valve seat member (5,24) and the outside circumferential portion of the sub-valve sheet (16b,28b,29b) is in tightened contact with the main valve sheet (16a,28a,29a).

5. Damping valve according to at least one of the claims 2 to 4, wherein an initial deflection is given to the outside circumferential portion of the main valve sheet (16a,28a,29a), said main valve sheet (16a,28a,29a) with the initial deflection is bent back in the working oil flow direction, and the oil chamber (S) is formed with a concave surface of the main valve sheet (16a,28a,29a) and a facing surface of the sub-valve (16b,28b,29b).

6. Damping valve according to at least one of the claims 2 to 5, wherein a shim (19) is interposed between the inside circumferential portions of the main valve sheet (16a,28a,29a) and the sub-valve sheet (16b,28b,29b), and both of the valve sheets are secured to the valve seat member (5,24).

7. Damping valve according to at least one of the claims 1 to 6, wherein a plurality of the communication holes (14,26,27) are bored in positions approximately on a single circle in the valve seat member (5,24).

8. Damping valve according to at least one of the claims 1 to 7, wherein a rigidity of the sub-valve sheet (16b) is set lower than that of the main valve sheet (16a).

9. Hydraulic damping cylinder means comprising a piston (5) inserted freely slidably in a cylinder (3), said piston (5) divides said cylinder (3) into an upper oil chamber (S1) and a lower oil chamber (S2), wherein said piston (5) is a valve seat member and is provided with at least one damping valve according to at least one of the claims 1 to 8, and said communication hole (14) is provided for working oil flow from one of the upper and lower oil chamber to the other thereof.

10. Pressure regulator comprising a piston (24) inserted freely slidably in a cylinder (22), said piston (24) divides said cylinder (22) into an upper oil chamber (S31) and a lower oil chamber (S32) each connected with a hydraulic damping cylinder means, respectively, wherein said piston (24) is a valve seat member and is provided with at least two damping valves according to at least one of the claims 1 to 8, and a communication hole (26) of a first damping valve is provided for working oil flow from the lower oil chamber (S32) to the upper oil chamber (S31) and a communication hole (27) of a second damping valve is provided for working oil flow from the upper oil chamber (S31) to the lower oil chamber (S32).

11. Suspension device for a four wheeled vehicle with at least two hydraulic damping cylinder means (1) comprising a piston (5) inserted freely slidably in a cylinder (3), said piston (5) divides said cylinder (3) into an upper oil chamber (S1) and a lower oil chamber (S2),
and with a pressure regulator (2) comprising a piston (24) inserted freely slidably in a cylinder (22), said piston (24) divides said cylinder (22) into an upper oil chamber (S31) and a lower oil chamber (S32) each connected with one of the upper and lower oil chamber (S1,S2) of the hydraulic damping cylinder means, respectively, wherein said piston (5) of the hydraulic damping cylinder means (1) is a valve seat member and is provided with at least one damping valve according to at least one of the claims 1 to 8, and said communication hole (14) is provided for working oil flow from one of the upper and lower oil chamber to the other thereof,
and/or
wherein said piston (24) of the pressure regulator (2) is a valve seat member and is provided with at least two damping valves according to at least one of the claims 1 to 8, and a communication hole (26) of a first damping valve is provided for working oil flow from the lower oil chamber (S32) to the upper oil chamber (S31) and a communication hole (27) of a second damping valve is provided for working oil flow from the upper oil chamber (S31) to the lower oil chamber (S32).
